(19) Europäisches Patentamt
European Patent Office
Office européen des brevets

(11) Publication number: **0 014 596**
**B1**

(12) **EUROPEAN PATENT SPECIFICATION**

(45) Date of publication of patent specification: **14.09.83**

(51) Int. Cl.³: **C 25 B 11/06**, C 25 C 7/02, C 25 D 17/10

(21) Application number: **80300392.0**

(22) Date of filing: **11.02.80**

(54) **Method for producing electrodes having mixed metal oxide catalyst coatings.**

(30) Priority: **12.02.79 US 11533**

(43) Date of publication of application:
**20.08.80 Bulletin 80/17**

(45) Publication of the grant of the patent:
**14.09.83 Bulletin 83/37**

(84) Designated Contracting States:
**AT BE CH DE FR GB IT NL SE**

(56) References cited:
**AT - B - 316 589**
**DD - A - 131 568**
**DE - A - 1 806 703**
**DE - A - 2 302 867**
**GB - A - 1 195 871**
**GB - A - 1 329 855**
**US - A - 3 689 383**
**US - A - 3 773 554**

(73) Proprietor: **DIAMOND SHAMROCK CORPORATION**
**1100 Superior Avenue**
**Cleveland Ohio 44114 (US)**

(72) Inventor: **Suchanski, Mary R.**
**18 E Spanish Trail**
**Rochester New York (US)**

(74) Representative: **Cronin, Brian Harold John et al,**
**c/o Eltech Systems Corporation 17-19, Chemin du Champ-d'Anier**
**CH-1209 Le Petit-Saconnex Geneva (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 014 596 B1**

Courier Press, Leamington Spa, England.

# Method for producing electrodes having mixed metal oxide catalyst coatings

This invention relates to electrode catalyst coatings, and, more specifically, to mixed metal oxide coatings on anodes and cathodes to be used for electrolytic processes, such as the electrolysis of alkali metal halide solutions, water electrolysis, electrowinning, the operation of fuel cells and electro-organic syntheses.

It is common practice in electrochemistry to utilize dimensionally-stable anodes having a valve metal substrate with an electroconductive catalytic coating, usually containing precious metals or oxides thereof, in place of the graphite formerly used. Because of the ever-increasing and high cost of precious metals, the cost of operating such cells is high, both in terms of original conversion to the incorporation of dimensionally-stable anodes and recoating of the anodes once the coating has deteriorated through use.

In recent years, interest in oxygen or air-depolarized electrodes has increased substantially, because gas-depolarized electrodes and processes using them are highly energy-efficient. Gas-depolarized electrodes are generally constructed of a hydrophobic polymer material, such as polytetrafluoroethylene (PTFE), and an electroconductive material, such as carbon black or precious metal blacks on a porous substrate. Again, as with dimensionally-stable anodes, an electrocatalyst generally comprising precious metals or oxides thereof is utilized, to effect reduction of oxygen gas at the electrode-gas-electrolyte interface.

Only dimensionally-stable anodes have found commercial utility in industrial electrolytic processes, because the reduction in production costs offsets the substantial investment in precious metal catalysts employed therewith. A less expensive but comparably effective electrocatalyst would be of extreme value in the industry.

It is known to employ a nickel/cobalt oxide spinel form of catalyst. Thus, GB—A—1,461,764 describes the preparation of nickel oxide/cobalt oxide spinel catalysts, by coprecipitating the metal ions upon a substrate from the corresponding oxalates or by freeze-drying the metal nitrates in solution with liquid nitrogen and depositing them on the electrode substrate, prior to thermal decomposition. These processes are very complex and require the use of highly-sophisticated equipment not necessitated by the present invention. Also, thermal decomposition of nitrates creates hazardous oxides of nitrogen, which must be disposed of.

It is also known to produce an electroconductive layer utilizing metal-organic compounds. Thus GB—A—1,416,072, describes the production of transparent electrodes, whereby metal-organic compounds are spray-coated on to glass or other transparent substrates and are heated to a high temperature (500° to 700°C) to produce a thin transparent layer of electroconductive metal oxide glass on the substrate surface. Such electrodes are utilized in electroluminescent flat display devices.

GB—A—1,195,871 describes electrodes formed from conductive substrates carrying mixed-crystal material comprising one or more film-forming metal oxides and one or more non-film-forming metal conductors.

US—A—3,528,857 discloses the use of a spinel-form catalyst of the formula $NiCo_2O_4$ for fuel cell electrodes. The catalytic spinel is formed by dissolving inorganic salts of nickel and cobalt in a suitable solvent, converting them to the hydroxides and drying, prior to heating in air to produce the spinel-form oxide. The resultant material may then be compressed to give a porous electrode structure. Alternatively, a solution of nickel and cobalt inorganic salts may be applied by immersing an electrode structure in the solution, followed by drying and heating to convert the nickel and cobalt salts to the spinel-form oxide.

AT—B—316,589 describes electrodes for electrochemical processes which have a titanium or other valve metal substrate having a metallic base layer and a top coating of titanium dioxide and/or tantalum oxide rendered more conductive by including other metal oxides, which can be of the spinel type.

US—A—3,663,280 describes the use of a metal-organic compound of a film-forming metal, such as titanium, zirconium, niobium, tantalum or tungsten, to produce a film-forming metal oxide coating on the surface of film-forming metal anodes having a precious metal catalyst applied thereto. Preferred metal-organic compounds are the alkoxides or alkoxy-halides of film-forming metals, such as titanates or chlorotitanates. The coating serves to inhibit anode base corrosion in the environment of an electrochemical cell.

US—A—3,689,383 describes the use of mixtures of thermally-decomposable organic and inorganic compounds of platinum group metals, e.g. ruthenium, and alkaline earth metals, e.g. calcium, on valve metal substrates, in the manufacture of dimensionally-stable anodes for use in electrolytic processes. These mixtures of compounds, e.g. ruthenium and calcium resinates, result in the formation of oxy-compounds of the metals directly upon the titanium or other valve metal substrate.

US—A—3,977,958 describes the use of a single metal spinel of cobalt oxide as an anode coating for chlor-alkali electrolysis. The cobalt salt of a long-chain fatty acid is applied to the surface of a titanium anode substrate and heated to decompose the salt to produce the desired cobalt oxide spinel structure. The coating optionally includes "modifier oxides", which

are oxides of metals selected from Groups III-B to VII-B and Groups III-A to V-A of the Periodic Table, and the lanthanides and actinides.

A similar modifier oxide may be used, according to US—A—4,061,549, with a bimetallic oxide spinel structure of the formula

$$M_xCO_{3-x}O_4,$$

where x is greater than 0 and less than or equal to 1 and where M is a metal selected from Groups I-B, II-A or II-B of the Periodic Table. The mixed metal spinel structure is obtained by applying mixed inorganic salts of cobalt and the selected metal in a volatile carrier to the surface of an anode structure.

While spinel-form oxide structures have been successfully produced upon electrode surfaces directly from solutions of metal compounds, perovskite phases require the preparation of the oxide in solid powder form, followed by affixing the powder to an electrode substrate with a binder. See US—A—3,917,525, 4,010,091 and 4,042,483.

It has now been discovered that electrocatalytic coatings for electrodes can be made, using one or more of a number of nonprecious metal oxides in conjunction with one or more other metal oxides, and this results in a substantial lowering of the cost of such coated electrodes. The invention thus provides improved methods of manufacturing electrodes, wherein the surface of an electrode substrate is provided with a coating of an electrocatalytic mixture of metal oxides.

In accordance with one aspect of the invention, a method of manufacture of an electrode is provided, in which metal-organic compounds are applied to the surface of an electrode substrate and are then subjected to thermal decomposition in an oxidizing atmosphere so as to form a mixed metal oxide electrocatalytic layer on the substrate, and the method is characterized in that the electrode substrate is a valve metal, that its surface is prepared by cleaning and etching, that a coating of antimony-doped tin oxide is provided on the cleaned and etched substrate surface and that the metal-organic compounds applied to the doped tin oxide coating and then subjected to thermal decomposition comprise a mixture of an organic compound of at least one first metal selected from iron, nickel, manganese, yttrium, the rare earth metals, thallium, lead, bismuth and metals selected from Groups IA, IIA, IB and IIB of the Periodic Table, and an organic compound of at least one second metal different from the first metal or metals and selected from manganese, iron, cobalt, nickel, titanium, zirconium, vanadium, niobium, tantalum, molybdenum, tungsten, ruthenium, osmium, rhodium, iridium, palladium, platinum, aluminium, thallium, lead and bismuth.

Preferably, the electrode substrate is titanium and it is cleaned and etched in a boiling solution of concentrated hydrochloric acid and water. The antimony-doped tin oxide coating is preferably formed by applying a solution of tin and antimony sulphates and thermally decomposing the sulphates.

By operating in accordance with the invention, the two or more selected metal-organic compounds described are oxidized on the surface of the electrode to produce mixed metal oxides in spinel, bronze or perovskite form, which lower the voltage required for the electrode reaction in electrolytic processes and/or offer greatly increased lifetimes in strong electrolytes.

The substrate can be titanium, tantalum, zirconium, niobium or some other valve metal which, after its surface has been cleaned and etched and then provided with the antimony-doped tin oxide coating, is then coated with a mixture of metal-organic compounds, this mixture is then dried and cured at elevated temperature to oxidize the compounds to their oxide forms and create a mixed metal oxide structure on the surface of the substrate. The resultant electrode is suitable for use in electrolytic processes, such as the electrolysis of water or sodium chloride and in electroorganic syntheses.

In carrying out the methods in accordance with the invention, the mixed metal oxide layer may be deposited on electrode substrates, using carrier solutions of the metal-organic compounds of the type described, by applying them by painting, spraying, dipping or vapour-deposition techniques, The coated substrate is then heated to evaporate the carrier solution and to oxidize the metal-organic compounds and create the desired spinel or perovskite oxide structure.

In carrying out the method of the invention, the electrode substrate is first prepared by cleaning and etching. The substrate material may be any of the various anode substrate valve metals common in the art, such as titanium, tantalum, niobium, vanadium or zirconium. The substrate material is cleaned and etched by treatment with any cleaning solvent which will give a properly prepared surface, such as by immersion in a boiling acid solution. The substrate may also be a valve metal base having a thin coating of precious metals or oxides thereof applied thereto with cleaning procedures modified accordingly.

The metal-organic compounds utilized in carrying out the invention may be metal salts of organic acids. Various compositions comprising such metal-organic compounds are available commercially from Mooney Chemicals of Cleveland, Ohio, such as 10% Nickel HEX-CEM, which is the nickel salt of 2-ethylhexanoic acid, 12% Cobalt HEX-CEM, which is the cobalt salt of 2-ethylhexanoic acid, and 6% Manganese TEN-CEM, which is the manganese salt of neodecanoic acid. The desired metal-organic compounds may be prepared by normal known

laboratory methods. With a smooth substrate, such as a valve metal anode, the metal-organic compound may be applied by any method, but the preferred method is to spray or paint the material on to the electrode substrate. In practice, several layers of the coating may be required, to build up sufficient thickness of material for effective catalytic activity and coating lifetime in electrolytic processes. The material is heated for a short period between each successive coating, to dry it prior to application of the next coating.

An initial coating of antimony-doped tin oxide is applied to the valve metal anode substrate, prior to the application of the metal-organic compounds. This produces an improved surface for reception of the metal-organic materials and results in the final electrode surface having a smoother and more lustrous appearance. Without the use of the antimony-doped tin oxide coating, the surface has a grainy matte appearance. Further, the mixed oxide coating has been found to be denser and more adherent and, thus, more durable, when the antimony-doped tin oxide is provided on the electrode substrate.

Following application of the metal-organic compounds, the coated electrode is heated, for instance, to about 250°C for at least 15 minutes. The temperature used may range from 200° to 800°C and the heating may last for a period of 15 to 60 minutes, in general.

The mixture of at least two metal-organic compounds forms a spinel oxide structure when baked at an oxidizing temperature in accordance with the above procedure. The addition or substitution of other metals may serve to alter the crystalline structure of the coating so as to produce a perovskite or bronze type structure. Further, such additions and substitutions may serve to increase the electrical conductivity of the electrocatalytic layer, improve the chemical and electrochemical stability of the coating and/or adjust the overvoltage for the preferential discharge of certain ions in electrochemical processes. When such additional metals are utilized, the metal-organic compounds are mixed with the other selected metal-organic substances and applied in the same manner as outlined above.

The following examples illustrate the invention and its preferred embodiments, but should not be construed as limiting the scope of the invention, as defined in the claims.

Example 1

A Ti sheet coupon was cleaned and etched in a boiling solution of concentrated HCl and deionized water (50:50). Three coats of Sb-doped $SnO_2$ were produced on the coupon, by brushing a layer of a solution of Sn and Sb sulphates on to the Ti sheet and then thermally decomposing the sulphates. The sulphate solution was prepared by mixing together 30 ml of butanol, 9.7 g of $SnCl_4 . 5H_2O$ (reagent analytical grade), 1.1 g of anhydrous $SbCl_3$ and 6 ml of 98% $H_2SO_4$. Each layer was pre-dried for 15 minutes at 120°C and then baked for 15 minutes at 600°C to convert the Sn and Sb sulphates to their oxides. A solution of 12 ml of 10% Ni HEX-CEM and 5 ml of 12% Co HEX-CEM was applied by brush to the coated substrate and this was then heated at 250°C for 15 minutes. 10 such coats were applied and heated to yield an anode with a very smooth, adherent oxide coating and a surface coverage of 44 g/m². X-ray diffraction analysis of the electrocatalytic layer indicated formation of the mixed metal oxide spinel, $CoNi_2O_4$. Anodes prepared in this fashion are eminently suited for alkaline water electrolysis. The anode potential in 40 g/l NaOH at 25°C, corrected for iR solution resistance, was 0.51 V vs. SCE at 0.15 A/cm² and 0.56 V vs. SCE at 0.45 A/cm². Under the same operating conditions, a pure Ni anode had a single electrode potential of 0.51 V vs. SCE at 0.15 A/cm² and 0.53 V vs. SCE at 0.45 A/cm². The electrode of the invention was tested as an anode in 40 g/l NaOH at 45°C and at a current density of 0.45 A/cm², and had a lifetime in excess of 3000 hours before failure (defined by total cell voltage in excess of 8.0 volts).

Example 2

A Ti coupon was cleaned and etched and given a Sb-doped $SnO_2$ layer by the procedure of Example 1. A solution of 6 ml of 10% Ni HEX-CEM and 10 ml of 12% Co HEX-CEM was applied by brush to the substrate and it was then heated at 250°C for 15 minutes. 10 coats were applied, so as to yield an anode with a catalyst surface coverage of 41 g/m². X-ray diffraction analysis of the catalyst layer indicated formation of the mixed metal oxide spinel, $NiCo_2O_4$. The anode potential in 40 g/l NaOH at 25°C, corrected for iR solution resistance, was 0.54 V vs. SCE at 0.15 A/cm² and 0.60 V vs. SCE at 0.45 A/cm². The electrode was tested as an anode in 40 g/l NaOH at 45°C and a current density of 0.45 A/cm² and had a lifetime in excess of 2500 hours.

Example 3

A Ti coupon was cleaned and etched and given a Sb-doped $SnO_2$ layer of the procedure of Example 1. A solution of 5 ml of 6% Mn TEN-CEM (Mn salt of neodecanoic acid) and 5 ml of 12% Co HEX-CEM was applied by brush to the substrate and it was then heated at 250°C for 15 minutes. 10 coats were applied, so as to yield an anode with a surface coverage of 22 g/m². The anode potential in 40 g/l NaOH at 25°C, corrected for iR solution resistance, was 0.56 V vs. SCE at 0.15 A/cm² and 0.62 V vs. SCE at 0.45 A/cm². The electrode was tested as an anode in 40 g/l NaOH at 45°C, at a current density of 0.45 A/cm², and had a lifetime of about 1700 hours.

Example 4

A Ti mesh coupon was cleaned and etched in

a boiling solution of concentrated HCl and distilled water (50:50). 3 coats of Sb-doped $SnO_2$ were applied to the Ti coupon by using the procedure of Example 1. A solution consisting of 12 ml of 10% Ni HEX-CEM and 20 ml of 12% Co HEX-CEM were prepared. 10 coats of this mixed salt solution was applied by brush to the substrate, a 20-minute thermal treatment at 300°C following the application of each coat. The resultant $NiCo_2O_4$-coated electrode was installed in a cell containing 400 g/l NaOH at 85°C and was anodically polarized at a current density of 0.032 A/cm². A stable half cell potential was maintained for over 4300 hours.

Example 5

An electrode with a $NiCo_2O_4$ coating was prepared as in Example 4. The electrode was installed in a cell containing 400 g/l NaOH at 85°C and was anodically polarized at a current density of 0.073 A/cm². A stable anode half cell potential was maintained for over 2200 hours.

Example 6

A Ti sheet coupon was cleaned and etched in a boiling aqueous solution of 18% HCl. 3 coats of Sb-doped $SnO_2$ were applied to the Ti coupon by the procedure of Example 1. A layer of Pt black (~1.0 g/m²) was then electroplated on to the electrode from a solution of 2% chloroplatinic acid in 2N HCl, by polarizing the substrate cathodically at 1 amp for 5 minutes. An equimolar solution of lanthanum and cobalt octoates was brushed on to the electrode and it was then dried for 15 minutes at 120°C and baked for 15 minutes at 600°C. A topcoat of the perovskite phase, $LaCoO_3$, was formed by this method. After applying 10 layers of $LaCoO_3$, the resultant electrode was polarized anodically in a solution of 300 g/l NaCl, pH≃1, 75°C, at current densities of 0.15 A/cm², 0.45 A/cm² and 0.75 A/cm², to yield iR-free single electrode potentials vs. SCE of 1.10 V, 1.16 V and 1.20 V, respectively.

Example 7

A Ti sheet coupon was cleaned and etched and given a Sb-doped $SnO_2$ layer by the procedure of Example 1. A solution of lanthanum octoate was prepared by dissolving 5.68 g of lanthanum octoate (ROC/RIC Chemicals) in 50 ml of toluene and 7 ml of 2-ethylhexoic acid (Union Carbide). An equimolar solution of lanthanum and cobalt octoates was then prepared by combining 1.01 g of 12% Co HEX-CEM with 10 ml of the lanthanum octoate solution. 10 coats of this mixed salt solution were then applied by brush to the Ti electrode substrate, a 15-minute heat treatment at 120°C and a 15-minute heat treatment at 600°C following the application of each coat. X-ray diffraction identified the perovskite phase, $LaCoO_3$, as being present on the electrode surface. The single electrode potentials of this electrode when polarized anodically in a solution of 300 g/l NaCl, pH≃1 at 75°C, were as follows: 1.09 V (0.75 A/cm²); 1.5 V (0.45 A/cm²); 1.18 V (0.75 A/cm²). Table 1 below summarizes the polarization data for the perovskite phases of the electrodes of this and the next two Examples.

Example 8

A Ti sheet coupon was cleaned and etched and given a Sb-doped $SnO_2$ layer by the procedure of Example 1. An equimolar solution of lanthanum and cobalt octoates was prepared by combining 2.01 g of 12% Co HEX-CEM and 20 ml of lanthanum octoate solution. 12 coats of the equimolar solution were applied by brush to the electrode substrate. After each coat had been applied, the electrode was dried at 200°C for 15 minutes and then baked at 600°C for 15 minutes. The $O_2$ single electrode potentials in 40 g/l NaOH and 150 g/l $H_2SO_4$ are shown in Table 1.

Example 9

A Ti sheet coupon was cleaned and etched and given a Sb-doped $SnO_2$ layer by the procedure of Example 1. An equimolar solution of lanthanum and manganese octoates was prepared by combining 3.75 g of 6% Mn HEX-CEM and 20 ml of lanthanum octoate solution. 12 coats of the equimolar solution were applied by brush to the electrode substrate. After each coat had been applied, the electrode was dried at 200°C for 15 minutes and then cured at 600°C for 15 minutes. X-ray diffraction revealed $LaMnO_3$ as the major phase on the electrode surface. The single electrode potentials in 40 g/l NaOH and 150 g/l $H_2SO_4$ are shown in Table 1.

TABLE 1

Single electrode potentials of examples 7—9
Electrodes

| Perovskite | Current density (A/cm² | 300 g/l NaCl pH~1 75°C | 150 g/l $H_2SO_4$ 50°C | 40 g/l NaOH 25°C |
|---|---|---|---|---|
| $LaCoO_3$ (Ex. 7 & 8) | 0.075 | 1.09 | 1.41 | 0.55 |
| | 0.45 | 1.15 | 1.45 | 0.61 |
| | 0.75 | 1.18 | 1.47 | 0.64 |
| $LaMnO_3$ (Ex. 9) | 0.075 | — | 1.44 | 0.73 |
| | 0.45 | — | 1.50 | 0.84 |
| | 0.75 | — | 1.65 | 0.91 |

**Claims**

1. A method of manufacture of an electrode suitable for use as an anode in an electrolytic process, in which metal-organic compounds are applied to the surface of an electrode substrate and are then subjected to thermal decomposition in an oxidizing atmosphere so as to form a mixed metal oxide electrocatalytic layer on the substrate, characterized in that the electrode substrate is a valve metal, that its surface is prepared by cleaning and etching, that a coating of antimony-doped tin oxide is provided upon the cleaned and etched substrate surface and that the metal-organic compounds applied to the doped tin oxide coating and then subjected to thermal decomposition comprise a mixture of an organic compound of at least one first metal selected from iron, nickel, manganese, yttrium, the rare earth metals, thallium, lead, bismuth and metals selected from Groups IA, IIA, IB and IIB of the Periodic Table, and an organic compound of at least one second metal different from the first metal or metals and selected from manganese iron, cobalt, nickel, titanium, zirconium, vanadium, niobium, tantalum, molybdenum, tungsten, ruthenium, osmium, rhodium, iridium, palladium, platinum, aluminium, thallium, lead and bismuth.

2. A method according to claim 1, in which the electrode substrate is titanium and it is cleaned and etched in a boiling solution of concentrated hydrochloric acid and water.

3. A method according to claim 1 or 2, in which the antimony-doped tin oxide coating is formed by applying a solution of tin and antimony sulphates and thermally decomposing the sulphates.

4. A method according to any preceding claim, in which the metal-organic compounds comprise nickel and cobalt 2-ethylhexanoates, manganese neodecanoate and cobalt 2-ethylhexanoate, lanthanum and cobalt octoates or lanthanum and manganese octoates.

5. A method according to any preceding claim, in which the mixture of metal-organic compounds is applied by being sprayed on to the coated substrate surface.

6. A method according to any of claims 1 to 4, in which the mixture of metal-organic compounds is applied by painting at least one layer of the mixture on the coated substrate surface.

7. A method according to any of claims 1 to 4, in which the mixture of metal-organic compounds is applied to the coated substrate surface by immersing the substrate in a solution of the mixture.

**Patentansprüche**

1. Verfahren zur Herstellung einer Elektrode zur Verwendung als Anode in einem elektrolytischen Prozeß, wobei metallorganische Verbindungen auf die Oberfläche eines Elektrodensubstrats aufgebracht und sodann einer thermischen Zersetzung in einer oxidierenden Atmosphäre unterworfen werden, um auf dem Substrat eine elektrokatalytische Schicht aus einem Metalloxidgemisch zu bilden, dadurch gekennzeichnet, daß als Elektrodensubstrat ein Ventilmetall eingesetzt wird, daß die Oberfläche des Elektrodensubstrats durch Reinigen und Ätzen vorbereitet wird, daß auf der gereinigten und geätzten Substratoberfläche ein mit Antimon doteirter Zinnoxidüberzug erzeugt wird und daß die auf den dotierten Zinnoxidüberzug aufgebrachten und sodann der thermischen Zersetzung unterworfenen metallorganischen Verbindungen aus einem Gemisch einer organischen Verbindung wenigstens eines ersten Metalls der Gruppe Eisen, Nickel, Mangan, Yttrium, Seltene Erdmetalle, Thallium, Blei, Wismut, und Metallen der Gruppen IA, IIA, IB und IIB des Periodensystems und einer organischen Verbindung wenigstens eines zweiten vom ersten Metall oder den ersten Metallen anderen Metalls der Gruppe Mangan, Eisen, Kobalt, Nickel, Titan, Zirkon, Vanadium, Niob, Tantal, Molybdän, Wolfram, Ruthenium, Osmium, Rhodium, Iridium, Palladium, Platin, Aluminium, Thallium, Blei und Wismut, bestehen.

2. Verfahren nach Anspruch 1, dadurch gekennzeichnet, daß ein Elektrodensubstrat aus Titan eingesetzt und das Substrat in einer siedenden Lösung von konzentrierter Salzsäure und Wasser gereinigt und geätzt wird.

3. Verfahren nach Anspruch 1 oder 2, dadurch gekennzeichnet, daß der Überzug aus mit Antimon dotiertem Zinnoxid durch Aufbringen einer Lösung von Zinnsulfat und Antimonsulfat und thermische Zersetzung der Sulfate gebildet wird.

4. Verfahren nach einem der Ansprüche 1 bis 3, dadurch gekennzeichnet, daß als metallorganische Verbindungen Nickel- und Kobalt-2-äthylhexanoat, Manganneodecanoat und Kobalt-2-äthylhexanoat, Lanthan- und Kobaltoctoat, oder Lanthan- und Manganoctoat eingesetzt werden.

5. Verfahren nach einem der Ansprüche 1 bis 4, dadurch gekennzeichnet, daß das Gemisch der metallorganischen Verbindungen durch Aufsprühen auf die beschichtete Substratfläche aufgebracht wird.

6. Verfahren nach einem der Ansprüche 1 bis 4, dadurch gekennzeichnet, daß das Gemisch der metallorganischen Verbindungen durch Bestreichen der beschichteten Substratfläche mit wenigstens einer Schicht des Gemisches aufgebracht wird.

7. Verfahren nach einem der Ansprüche 1 bis 4, dadurch gekennzeichnet, daß das Gemisch der metallorganischen Verbindungen auf die beschichtete Substratfläche durch Eintauchen der beschichteten Substratfläche in eine Lösung des Gemisches aufgebracht wird.

**Revendications**

1. Procédé de fabrication d'électrodes aptes

à être utilisées en tant qu'anodes dans un processus électrolytique, selon lequel des composés métallo-organiques sont appliqués sur la surface d'un substrat d'électrode, puis sont soumis à une décomposition thermique en atmosphère oxydante de manière à former sur le substrat une couche électrocatalytique à base d'une mélange d'oxydes métalliques, caractérisé par le fait que le substrat d'électrode est fait en un métal valve, que sa surface est préparée par nettoyage et décapage, qu'un revêtement d'oxyde d'étain dopé à l'antimoine est réalisé sur la surface nettoyée et décapée du substrat et que les composés métallo-organiques appliqués au revêtement d'oxyde d'étain dopé, puis soumis à la composition thermique comprennent un mélange d'un composé organique d'au moins un premier métal choisi parmi le fer, le nickel le manganèse, l'yttrium, les métaux des terres rares, le thallium, le plomb, le bismuth et les métaux des groupes I-A, II-A, I-B, II-B de la classification péroidique, et d'un composé organique d'au moins un second métal différent du premier métal ou des premiers métaux et choisi parmi le manganèse, le fer, le cobalt, le nickel, le titane, le zirconium, le vanadium, le niobium, le tantale, le molybdène, le tungstène, le ruthénium, l'osmium, le rhodium, l'iridium, le palladium, le platine, l'aluminium, le thallium, le plomb et le bismuth.

2. Procédé selon la revendication 1, caractérisé par le fait que le substrat d'électrode est réalisé en titane et qu'il est nettoyé et décapé dans une solution bouillante d'acide chlorhydrique concentré et d'eau.

3. Procédé selon la revendication 1 ou 2, caractérisé par le fait que le revêtement d'oxyde d'étain dopé à l'antimoine est formé par application d'une solution de sulfates d'étain et d'antimoine et par décomposition thermique des sulfates.

4. Procédé selon l'une quelconque des revendications précédentes, caractérisé par le fait que les composés métallo-organiques comprennent les éthyl-2 hexanoates de nickel et de cobalt, le néodécanoate de manganèse et l'éthyl-2 hexanoate de cobalt, et les octoates de lanthane et de cobalt ou de lanthane et de manganèse.

5. Procédé selon l'une quelconque des revendications précédentes, caractérisé par le fait que le mélange de composés métallo-organiques est appliqué par projection sur la surface revêtue du substrat.

6. Procédé selon l'une quelconque des revendications 1 à 4, caractérisé par le fait que le mélange de composés métallo-organiques est appliqué par badigeonnage à la manière d'une peinture en au moins une couche sur la surface revêtue du substrat.

7. Procédé selon l'une quelconque des revendications 1 à 4, caractérisé par le fait que le mélange de composés métallo-organiques est appliqué à la surface revêtue du substrat par immersion du substrat dans une solution contenant le mélange.